Europäisches Patentamt

European Patent Office

Office européen des brevets

(19)

(11) Publication number: **0 106 659**
A2

# EUROPEAN PATENT APPLICATION

(12)

(21) Application number: **83306168.2**

(22) Date of filing: **12.10.83**

(51) Int. Cl.³: **F 23 R 3/40**
**F 23 R 3/34, F 23 R 3/04**

(30) Priority: **15.10.82 US 434675**

(43) Date of publication of application:
**25.04.84 Bulletin 84/17**

(84) Designated Contracting States:
**BE CH DE FR GB IT LI NL SE**

(71) Applicant: **WESTINGHOUSE ELECTRIC CORPORATION**
**Westinghouse Building Gateway Center**
**Pittsburgh Pennsylvania 15235(US)**

(72) Inventor: **Scheihing, Paul Edward**
**Fox Valley West Apartment J3**
**Glen Mills Pennsylvania(US)**

(72) Inventor: **Pillsbury, Paul Walter**
**406 Hawthorne Lane**
**Wallingford Pennsylvania(US)**

(74) Representative: **van Berlyn, Ronald Gilbert**
**23, Centre Heights**
**London, NW3 6JG(GB)**

(54) Secondary nozzle structure for a gas turbine combustor.

(57) A combustor for a land based turbine comprises a generally tubular sidewall having a downstream mixing zone where a mixture of fuel and air is developed for downstream combustion. The sidewall further defines an upstream primary zone into which air is admitted through sidewall openings to develop an axial airflow for mixing with downstream injected fuel. Nozzles spray fuel in small rapidly evaporable droplets inwardly through the sidewall at a secondary location between the primary zone and the mixing zone for mixing with the primary air flow. A catalyst is coupled to the combustor sidewall at the outlet of the mixing zone. The fuel nozzles are provided with axial swirlers and are angled downstream to increase the uniformity of fuel/air mixing.

FIG. 3

1

# TURBINE COMBUSTOR HAVING IMPROVED SECONDARY NOZZLE STRUCTURE FOR MORE UNIFORM MIXING OF FUEL AND AIR AND IMPROVED DOWNSTREAM COMBUSTION

The present invention generally relates to combustors employed in land based combustion turbines and more particularly to combustors in which substantially uniform mixing of fuel and air across the combustor mixing zone is needed prior to entry of the mix into the combustion zone, i.e. the catalyst zone in catalytic combustors.

Premixing of fuel and air in premix combustors is needed to provide long combustor life, high combustor efficiency and low emissions through proper combustion operating temperatures and chemistry. Catalytic combustors provide a practical commercial solution offering low pollutant (and especially low NOx) combustion turbine operation for electric power plants and other land based applications; proper catalytic combustion especially requires substantial uniformity in the premixing of fuel and air within the combustor mixing zone.

With the operating compressor discharge pressure in most engine designs, some preheating of fuel is needed for proper catalytic combustion. Thus, a catalytic combustor may be provided with a generally tubular envelope having a primary combustion zone followed in sequence first by a secondary fuel injection and mixing zone and finally by a catalyst. The primary combustion zone operates for example during startup when operating temperatures do not adequately support catalytic combustion.

During the catalytic combustion phase of operation, secondary fuel is injected into the mixing zone where it mixes with air for delivery to the flow channels through the catalyst.

Typically, the secondary fuel injectors are disposed circumferentially about the mixing zone and they may inject fuel radially inwardly at right angles or otherwise into the combustor mixing zone. Further, the fuel must be essentially completely vaporized before entering the catalyst zone which requires that the fuel nozzle produce very small droplets which can evaporate rapidly. Small droplets can be obtained by using a very high fuel nozzle pressure drop (pressure atomization), by using a small amount of high energy atomizing air (air assist), or by using a relatively large amount of low energy atomizing air (air blast). In all cases, the momentum of the resulting fuel spray is quite high. In fact the momentum of the fuel spray with respect to the momentum of the cross flowing air inside the combustor is high enough that the fuel tends to penetrate to the center (axis) of the combustor. This action produces a fuel rich core, i.e. the fuel/air ratio profile has a single center peak shape across a reference diameter of a cross section of the combustor mixing zone.

The fuel/air ratio is highest at the axis in the fuel injection plane or region, and it decreases in the radial outward direction. As the mix flows downstream through the mixing zone, additional mixing action causes the fuel/air ratio profile to flatten somewhat. In general, however, the scope of fuel penetration in the injection region has resulted in too much axial fuel concentration to permit available downstream mixing to produce a substantially uniform fuel/air ratio distribution at the catalyst entry plane.

The invention in its broad form comprises a generally tubular sidewall enclosing a downstream mixing zone where a mixture of fuel and air is developed for downstream combustion, said sidewall further enclosing an upstream primary zone into which primary air is admitted through sidewall openings to develop an axial airflow for mixing with downstream injected fuel, means for spraying secondary fuel in small rapidly evaporable droplets generally in the radial inward direction at a location between said primary zone and said mixing zone for mixing with the primary air flow, said secondary fuel spraying means including a plurality of nozzles disposed at an angle directed substantially downstream to enhance the mixing of fuel and air for improved uniformity of the fuel/air mixture at the mixing zone outlet.

As described hereinafter, improved operation is obtained in combustors and especially catalytic combustors through structure which promotes more uniform mixing of fuel and air in a mixing zone located immediately upstream from the zone where combustion occurs. Preferably, the structure includes fuel injector nozzles which are angled to inject fuel sprays at an angle toward the downstream direction, and swirlers which centrifuge and stir the fuel sprays into a wider spread to promote mixing. Accordingly, a more uniform fuel/air ratio profile is produced at the catalyst entry plane.

A more detailed understanding of the invention may be had from the following description of a preferred embodiment, given by way of example and to be studied in conjunction with the accompanying drawings wherein:

Figure 1 shows an elevation view of a catalytic combustor having portions thereof cut away and being arranged in accordance with an embodiment of the invention;

Figure 2 shows a diagram of a prior art combustor configuration used in obtaining comparative test results;

Figure 3 is a schematic diagram showing combustor dimensions and scoop and nozzle locations for an embodiment of the invention like that of Figure 1;

Figure 4 is a variation of Figure 3 in which angled secondary nozzles are employed without swirlers;

Figure 5 is a schematic diagram showing air flow distribution percentages for a combustor like that shown in Figure 3;

Figure 6 is a variation of Figure 5 in which angled secondary nozzles are employed without swirlers;

Figure 7 is an enlarged view of a nozzle and axial swirler arrangement employed in the combustors as Figures 1, 3 and 5;

Figure 8 shows test results obtained with use of the present invention as compared to results obtained with a prior art reference; and

Figures 9, 10 and 11 show respective longitudinal and cross-section views of another embodiment in which a combustor is provided with multiple annular primary zone nozzles and an axial secondary fuel injector arrangement near the combustor mixing zone.

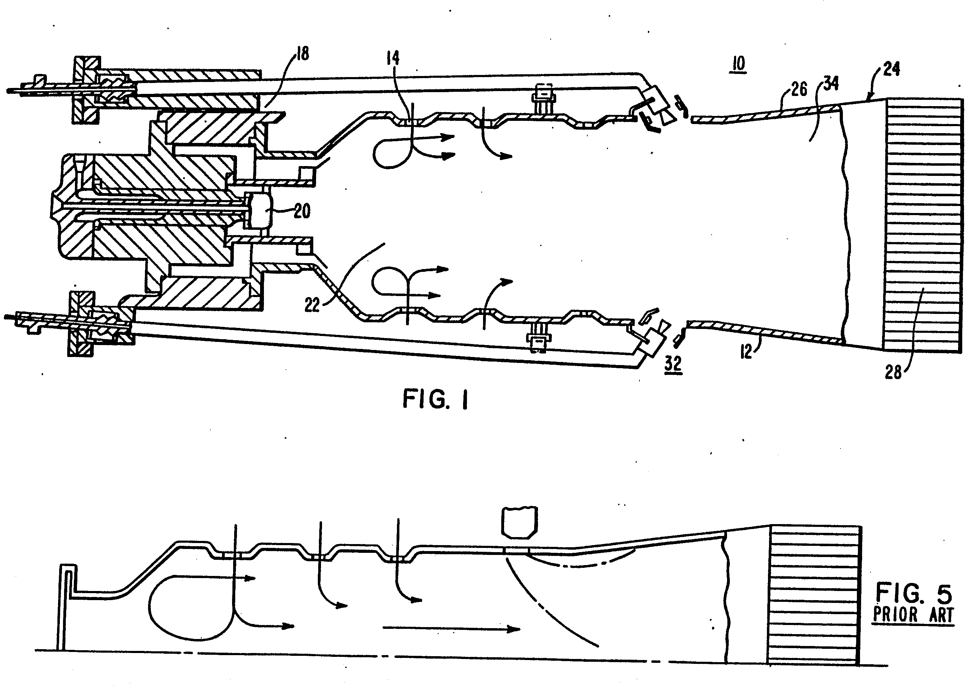

More particularly, a catalytic combustor 10 is shown in Figure 1 for a land based combustion turbine which is typically used in electric power and other industrial plants.

The combustor 10 includes a generally tubular sidewall 12 having successive circumferential rows of holes 14, 16 for entry of air used in the combustion process. At a head end 18 of the combustor 10, a primary fuel nozzle 20 admits fuel for burning in a primary zone 22 to generate the energy needed for startup until operating conditions support catalytic combustion. In addition, the primary nozzle 20 supplies some fuel for primary combustion during catalytic operation to provide any preheating needed to keep the gas temperature at a catalyst entry plane 24 at the value needed (i.e. approximately 1800 - 1950°F) for efficient catalytic combustion. The overall combustor operation involves amounts of primary fuel combustion such that NOx production is well below prescribed environmental limits.

An outlet end 26 of the combustor wall 12 is outwardly flared and coupled to a conventional catalyst element 28 having a honeycomb structure. In turn, the catalyst outlet 30 is coupled to a transition duct (not shown) which directs the hot gases to the turbine (not shown).

Secondary fuel is injected into the combustor 10 during the catalytic combustion phase of operation by a set of circumferentially spaced injectors 32 at the downstream end of the primary combustor zone 22. Air may or may not enter the combustor 10 at the injector locations. A combustor region 34 between the primary zone and the catalyst element 28 provides for mixing of the secondary fuel and air prior to its entry into the catalyst 28. The region 34 is referred to as a mixing zone, and combustion does not occur in this zone since flashback can damage the combustor and/or catalyst 28.

Generally, the fuel/air distribution is controlled and the center peaked fuel/air mix is avoided by the way in which the secondary fuel injector is structured and the manner in which it is disposed relative to the combustor wall.

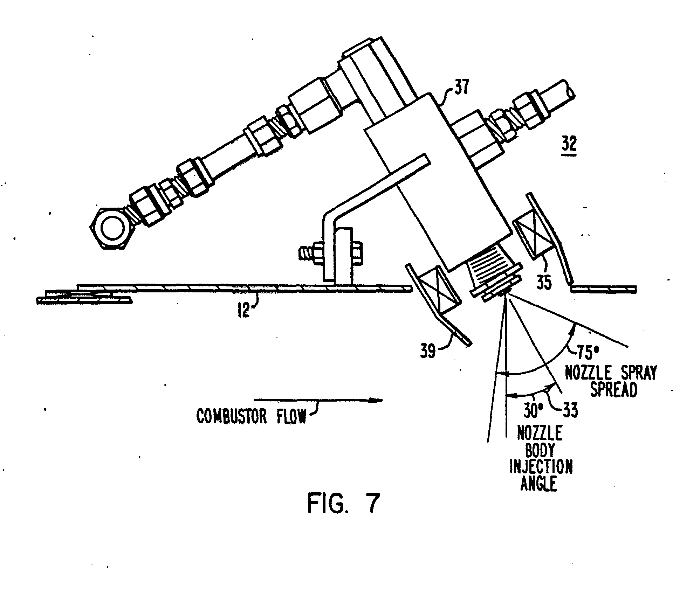

Particularly, each secondary fuel injector 32 includes a nozzle 37 (Figure 7) angled toward the downstream direction as indicated by the reference character 33 (Figure 7) to effect directly a greater axial velocity component for the fuel spray and reduced fuel penetration toward the combustor axis. The injector angle is set according to combustor geometry and operating conditions to shift the radius at which fuel peaking occurs so that a more uniform fuel/air mixture is produced across the entry face 24 of the catalyst element 28.

A continuous air atomizing nozzle may be employed for the nozzle 37, as shown, for very fine droplet atomization, or a simple pressure-atomizing nozzle may be used. Among others, a natural gas injector may also be used.

Further, an axial swirler 35 and directive shroud 39 (Figure 7) are mounted concentrically about each secondary nozzle 37 to provide additional air with a strong swirl component in intimate contact with the injected fuel spray. The fuel in the spray is acted upon by the stirring action of the air to provide increased fuel/air mixing. In addition, the centrifuging action of the air causes the fuel spray to spread more greatly thereby further enhancing the fuel/air mixing.

Since the combustor shell air outside of the combustor is at a higher pressure than the air inside the combustor, air rushes into the combustor through the secondary swirlers. The inflow air swirls in vortices surrounding each nozzle spray and picks up the spray droplets and centrifuges them outward to generate a much wider spray angle than the nozzle itself could. The shroud 39 brings the swirler air vortex and the fuel spray more intimately into contact.

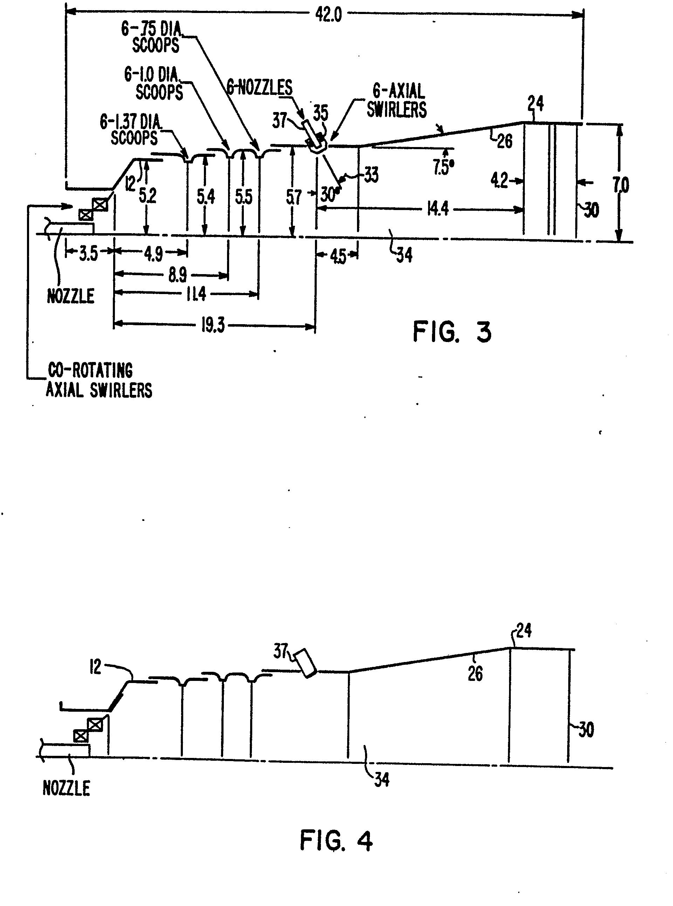

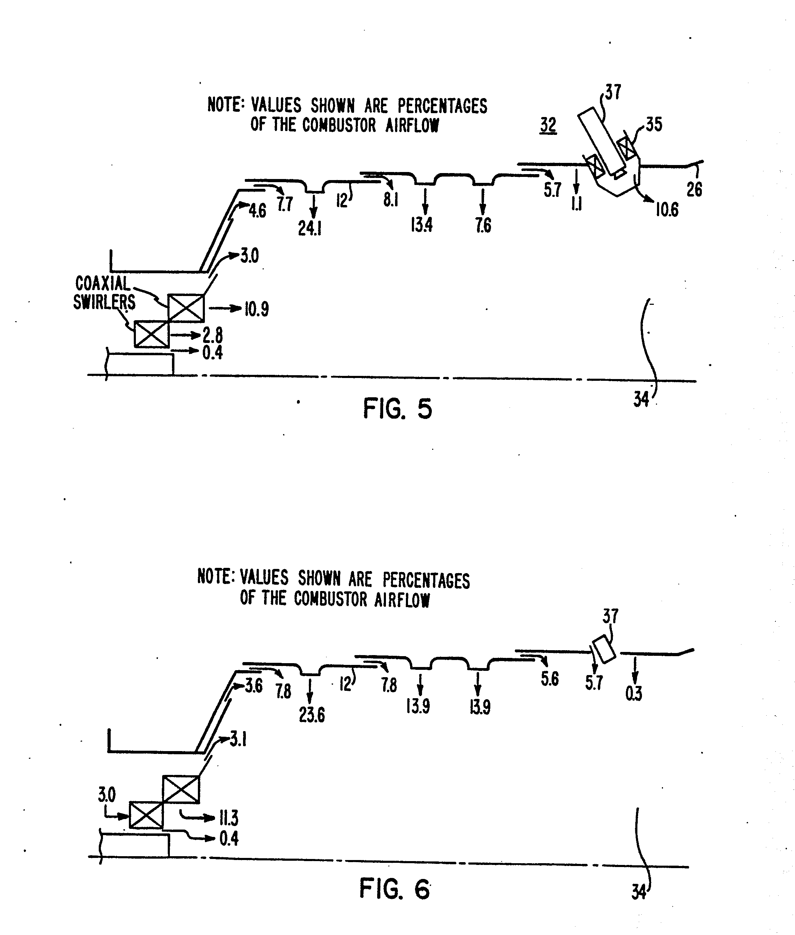

Figure 3 shows the angled nozzle 37 and swirler 35 with dimension information and scoop and nozzle location information for a combustor having a shell and front end similar to those of the combustor of Figure 1. Figure 4 shows a like arrangement for a fuel injector 32 without a swirler. Approximately 10.6% of the combustor air may pass through the six combined secondary fuel nozzle swirlers (Figure 5).

Similarly, Figure 5 provides percentage airflow information for the Figure 3 combination and Figure 5 provides percentage airflow information for the Figure 4 combustor.

Although a total of six secondary injectors are indicated as being used, a greater or fewer number may be employed. For example, eight injector combustors have been tested. If cost is a major consideration, and mixing is not too adversely affected for a particular combustor design, fewer nozzles such as four may be employed. Generally, the more complex and more costly angled swirler injector embodiment of Figure 3 provides somewhat better mixing than the angled nozzle embodiment of Figure 4, and it may be possible to use fewer injectors in the Figure 3 embodiment while obtaining comparable or better mixing results.

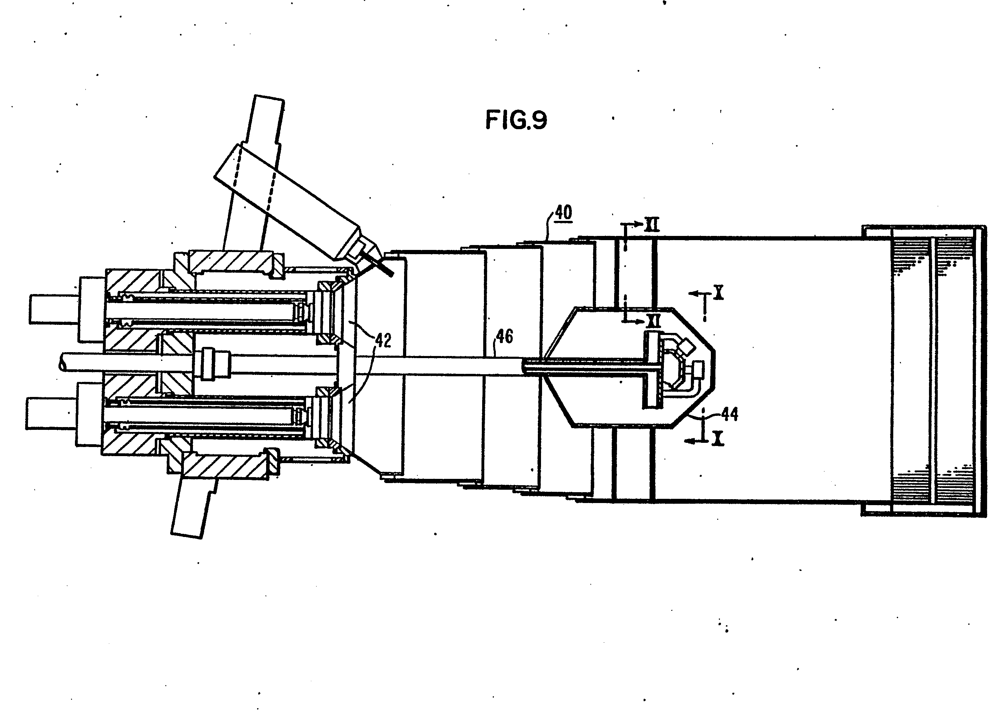

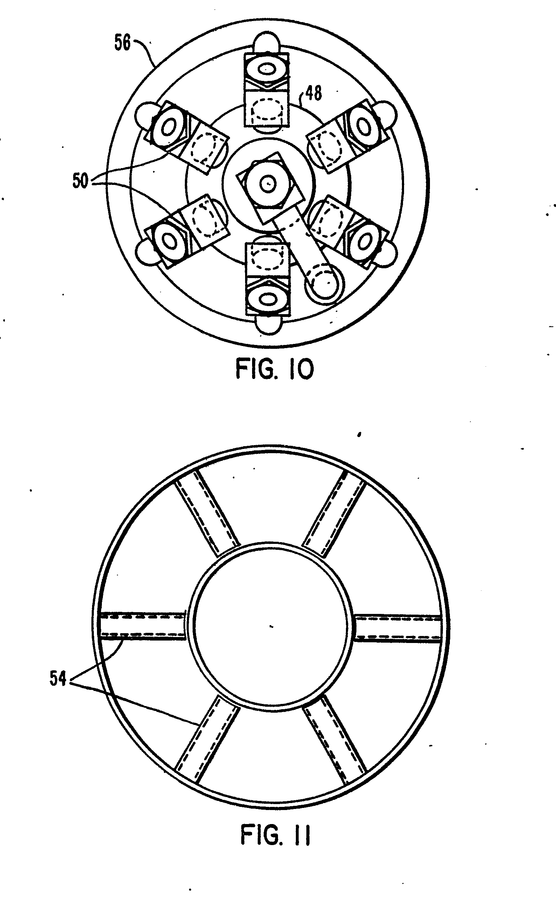

In another embodiment shown in Figures 9-11, a combustor 40 is provided with an annular four nozzle primary fuel supply 42 and a secondary fuel injector assembly 44 supplied by an axial atomizing air and fuel supply line 46 and located at the end of the primary zone and the front end of the fuel mixing zone. The injector assembly includes a fuel manifold 48 which supplies six fuel nozzles 50 equally disposed about the combustor space at a suitably radial location. The nozles 50 are angled toward the downstream direction and the outer wall of the combustor. An axial nozzle 52 is included to spray fuel directly along the combustor axis.

In this case, the fuel spray from each nozzles is directed by an air jet. Radial cross-flow struts 54 supply air to an air manifold 56 for the air jets and for cooling air for the secondary fuel assembly liner. Atomizing air for the secondary nozzles is supplied by the line 46. Appropriate cooling structure, such as a film or transpiration cooling arrangement, is provided for the secondary injection liner and the air struts.

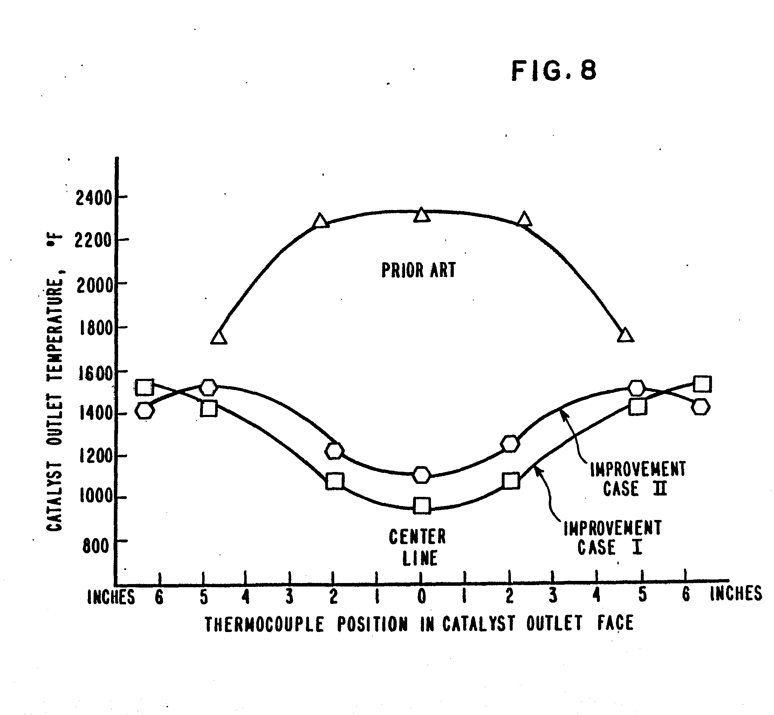

As shown by test results in Figure 8, the catalyst outlet temperature, which reflects the catalyst entry fuel/air ratio profile, shows improved evenness of distribution (i.e. a generally flattened shape) for embodiments of the invention as compared to the center peaked distribution for the prior art. Figure 2 shows the configuration used for the prior art in the test while Figure 1 shows the invention configuration used in the test. Case I employed angled fuel nozzles and Case II includes angled fuel nozzles and axial swirlers. The provision of angled nozzles and/or swirlers in the invention configuration is the principal reason for the improvements observed.

The following are the conditions applicable to the tests of Figure 8:

COMPARISON OF CATALYST OUTLET TEMPERATURE
PROFILES FROM FULL SCALE TESTS IN CONCORDVILLE LAB

|  | PRIOR ART | IMPROVEMENT I | IMPROVEMENT II |
|---|---|---|---|
| SECONDARY NOZZLES, ANGLE OF INJECTION, DEGREES DOWNSTREAM FROM RADIAL . . . . . . . . . | 0° | 45° | 30° |
| SECONDARY NOZZLES, ANGLE OF SPREAD OF FUEL SPRAY. . . . . | 50° | 50° | 75° |
| TYPE OF FUEL SPRAY HOLE ON SIDE OF COMBUSTOR . . . . . . | 1.250 IN. SCOOP | 1.125 IN. PLAIN | 1.125 IN PLAIN |
| ANGLE OF AIR INLET SCOOPS IMMEDIATELY UPSTREAM OF SECONDARY FUEL NOZZLES. . . . | RADIAL | RADIAL | RADIAL |
| COMBUSTOR AIR INLET TEMP. . . | 860°F | 776°F | 800°F |
| PRESS. . . | 116 PSIA | 173 PSIA | 210 PSIA |
| FUEL/AIR. . . | 0.0105 | 0.0129 | 0.0120 |

NOTES:

(1) All tests had airflow adjusted to give 80 to 83 ft/sec. velocity approaching catalyst.

(2) Thermocouple readings radially averaged at catalyst exit face.

9

CLAIMS:

1. In a land based turbine, a/combustor, comprising a generally tubular sidewall enclosing a downstream mixing zone where a mixture of fuel and air is developed for downstream combustion, said sidewall further enclosing an upstream primary zone into which primary air is admitted through sidewall openings to develop an axial airflow for mixing with downstream injected fuel, means for spraying secondary fuel in small rapidly evaporable droplets generally in the radial inward direction at a location between said primary zone and said mixing zone for mixing with the primary air flow, said secondary fuel spraying means including a plurality of nozzles disposed at an angle directed substantially downstream to enhance the mixing of fuel and air for improved uniformity of the fuel/air mixture at the mixing zone outlet.

2. A combustor as set forth in claim 1 wherein a catalyst is coupled to the combustor at the outlet of said mixing zone.

3. A combustor as set forth in claim 2 wherein the head end of said combustor includes a primary fuel nozzle means which supplies fuel for combustion in said primary zone to supplement the catalytic combustion under limited predetermined operating conditions.

4. A combustor as set forth in claim 2 wherein said fuel spraying means further includes a coaxial swirler mounted about each of said nozzles to impart swirler air against the associated fuel spray and thereby further enhance the fuel/air mixing action and provide additional spreading of the fuel spray.

5. A combustor as set forth in claim 2 wherein said secondary nozzles are at least six in number and are disposed in spaced relation about the periphery of said sidewall to inject fuel radially inwardly and downstream at said angle.

6. A combustor as set forth in claim 4 wherein said secondary nozzles are at least six in number and are disposed in spaced relation about the periphery of said sidewall to inject fuel radially inwardly and downstream at said angle.

7. A combustor as set forth in claim 4 wherein the head end of said combustor includes a primary fuel nozzle means which supplies fuel for combustion in said primary zone to supplement the catalytic combustion under limited predetermined operating conditions.

FIG. 1

FIG. 5
PRIOR ART

0106659

FIG. 3

FIG. 4

0106659

3/7

NOTE: VALUES SHOWN ARE PERCENTAGES
OF THE COMBUSTOR AIRFLOW

COAXIAL SWIRLERS

FIG. 5

NOTE: VALUES SHOWN ARE PERCENTAGES
OF THE COMBUSTOR AIRFLOW

FIG. 6

0106659

47

FIG. 7

FIG. 8

CATALYST OUTLET TEMPERATURE, °F

PRIOR ART

IMPROVEMENT CASE II

IMPROVEMENT CASE I

CENTER LINE

INCHES 6 5 4 3 2 1 0 1 2 3 4 5 6 INCHES

THERMOCOUPLE POSITION IN CATALYST OUTLET FACE

0106659

FIG.9

FIG. 10

FIG. 11